# EUROPEAN PATENT APPLICATION

(11) **EP 3 031 367 A1**
(43) Date of publication of application: **15.06.2016**
(21) Application number: 14196968.3
(22) Date of filing: 09.12.2014
(51) Int. Cl.: A47J 31/40

(54) **Beverage dispenser with powder container**

(71) Applicant: Nestec S.A., 1800 Vevey (CH)
(72) Inventor: Brunner, Yann, 1485 Nuvilly (CH)
(74) Representative: Ducreux, Marie

(57) **Abstract**

The invention concerns a container for storing and dosing a food or beverage powder comprising :
- a tank (11),
- a horizontal outlet duct (13) at the bottom of the tank,
- at least one rotatable volumetric dosing device (12) positioned at the bottom of the tank (113) and configured for displacing a dose of powder in direction of the outlet duct,

wherein the container comprises at least one movable cutting blade (10) at the end of the outlet duct.

## Description

### Field of the invention

The present invention relates to beverage dispensers preparing beverages from a food powder stored in a container and from which a dose of powder is dispensed to prepare a beverage.

### Background of the invention

Many beverages like espresso and other coffee beverages, milk beverages, chocolate beverages are prepared by mixing a beverage soluble powder with a diluent. Mixing devices are known for speedier preparation of such beverages by mixing the beverage soluble powder with the diluent, such as water. These devices can comprise a dissolution chamber in which the soluble component and the diluent are fed. The diluent can be introduced into the dissolution chamber in order to create a whirlpool to efficiently dissolve the soluble powder in the hot water or the hot diluent can be introduced under the form of jets that provides mixing, dissolving and frothing. The mixture can also eventually be frothed by a whipper in the dissolution chamber to reconstitute the beverage and produce foam. The beverage is then usually evacuated into a receptacle for drinking. These devices can also mix the beverage soluble powder with the diluent in a drinking cup, usually a single use cup. In that case the soluble food component is introduced in the cup and the diluent is introduced under the form of jets that provides mixing, dissolving and/or frothing.
Whatever the way the powder and the diluent are mixed together the beverage soluble powder is usually stored in a container placed above the dissolution chamber opened mouth and a dosing device like a screw or an auger doses and delivers the beverage soluble powder which falls in the dissolution chamber or the drinking cup. Diluent is simultaneously fed to the dissolution chamber so that dissolution occurs.

Depending on the nature of the powder, it has been observed that the powder can fall from the container in form of blocks or lumps in the dissolution chamber.
This phenomenon can affect the consistency of the dosing. Actually the powder dosing is implemented by the actuation of the dosing device, said device displacing the powder to the outlet of the container. The control of the dosing is directly linked to the time length of actuation of the dosing device. The control of the dosing supposes that once the actuation of the dosing is stopped, then no more powder is dispensed from the outlet.
Yet with powders such as described above even when the dosing device is stopped, a whole block of powder positioned next to the outlet can slide from the outlet and be dispensed. It affects the dosing consistency of the two doses : the one that has just been delivered that becomes too high, and the following dose that will be too low.

Moreover, depending on the nature of the powder, these blocks and lumps can be more difficult to dissolve during the beverage preparation and affect the aspect, taste and quality of the final beverage.

This phenomenon of powder blocks formation can appear even if the outlet of the dosing device is closed by a movable cover between two dosing operations. Actually the cover my feed the powder back in the dosing device and compress it. It may lead to dissolution issue after the next dosing operation.

One solution to reduce the property of fat powders to form blocks is to add flowing additives to the powder like SiO₂. Yet such additives increase the costs of the powders and may affect other properties of the powder, like dissolution. It becomes necessary to use specific powders dedicated to use in beverage reconstitution machines.

An object of the invention is to address at least some of the drawbacks of the storing and dosing powder containers of the prior art or at least to provide an alternative thereto.

It would be advantageous to provide a storing and dosing powder container for a beverage dispenser limiting or preventing the formation of lumps.

It would be advantageous to provide a storing and dosing powder container dispensing powder with accurate dosing whatever the nature of the powder.

It would be advantageous to provide a storing and dosing powder container for a beverage dispenser that can be filled with any sort of beverage reconstitution powder without having to add flowability additives to the powder.

It would be advantageous to provide a new storing and dosing powder container for a beverage dispenser that can be used in existing beverage preparation machines.

It would be advantageous to provide a new storing and dosing powder container for a beverage dispenser that does not present increased manufacturing costs compared to current storing and dosing powder containers.

### Summary of the invention

In a first aspect of the invention, there is provided a container for storing and dosing a food or beverage powder comprising :
- a tank,
- a horizontal outlet duct at the bottom of the tank,
- at least one rotatable volumetric dosing device positioned at the bottom of the tank and configured for displacing a dose of powder in direction of the outlet duct,
wherein the container comprises at least one movable, preferably rotating, cutting blade at the end of the outlet duct.
Accordingly objects of the invention are solved since the at least one cutting blade cuts the dose of powder displaced by the rotatable volumetric dosing device before it falls out of the outlet duct. Consequently small cut doses of powder are delivered that can be easily dissolved.

Generally the tank of the container presents two lateral walls and two end walls, usually one rear end wall and one front end wall. The walls extend between the bottom and the top of the tank and are essentially vertical. By essentially vertical it is meant that some parts of the walls can be inclined, for example for increasing the storing volume of the tank above the screw or for creating a funnel that pushed powder to the screw.
If the rotatable volumetric dosing device is an endless screw or a spring auger, the bottom of the tank is preferably U shaped and the endless screw or spring auger is lodged in this U-shaped bottom. If two screws or two augers are present, preferably, they are lodged in a double U-shaped bottom.
The top of the tank is preferably closed by a removable lid in order to be able to refill the tank.

The horizontal outlet duct is usually positioned at the bottom of the front end wall.

The rotatable volumetric dosing device can be an endless screw or, alternatively, a helicoidal spring, also known as spring auger. It is preferably an endless screw.

Usually the end of the rotatable volumetric dosing device extends through the horizontal outlet duct. Preferably the external end of the rotatable volumetric dosing device does not overlap the end of the outlet duct.

According to the preferred embodiment, the movable cutting blade is attached to said front end of the rotatable volumetric dosing device.

Accordingly the rotatable volumetric dosing device is used to rotate the cutting blade too. Consequently only one motor is used for actuating the volumetric dosing device and the cutting blade.
Advantageously it is possible to retrofit existing containers for storing and dosing a food or beverage powder by simply removing the rotatable volumetric dosing device and replacing it with a rotatable volumetric dosing device having a blade attached to its front end.

According to one preferred embodiment the rotatable volumetric dosing device may be configured to comprise a volume of transport that is greater in the front portion of the device than in the rear portion of the device.
If the rotatable volumetric dosing device is a spring auger, this configuration can be obtained with a solid insert placed within the helicoidal spring in rear end of the spring, thus reducing the capacity of the auger to move the powder in the rear region as opposed to the front region of the container.
In case of an endless screw, this configuration can be obtained with the core of the screw presenting a decreasing section from the rear end of the screw to the front end of the screw.

According to one particular embodiment, the container can comprise two endless screws. Preferably the two endless screws are positioned next to the other in the same horizontal plane.
Advantageously two endless screws improve the dispensing property by avoiding that powder remains isolated in a part of the tank and is not dispensed.
Preferably the two endless screws present screw paths configured for displacing the powder in direction of the outlet, each screw rotating in a direction opposed to the other screw. Preferably a rotating cutting blade is attached to the front end of each endless screw.

Preferably, for each of the two endless screws, an end part of the external surface of the endless screw presents indentations cooperating with indentations of the other endless screw.
Accordingly the beverage dispenser can comprise one motor for cooperating with one of the two endless screws only.
Advantageously the rotation of one endless screw drives the rotation of the other endless screw simultaneously

According to one embodiment the container can comprise a movable cover configured for closing the external end of the outlet duct.

Usually the cover at the outlet of tank is opened during the dosing operation and can be closed when no dosing operation is implemented. Consequently the outlet of the tank can remain closed during the beverage preparation operations, that is to say when moisture is generated. Moisture is prevented from entering inside the powder container.
Preferably the movable cover is movable by translation, preferably along the direction of the longitudinal axis of the outlet duct.

In a second aspect of the invention, there is provided a beverage dispenser comprising :
- at least one container such as described above,
- at least one beverage preparation unit operatively linked to the container for preparing a beverage from the stored food or beverage powder,
- at least one motor for actuating the at least one rotatable volumetric dosing device of the container.

The beverage preparation unit can be any device for contacting the food or beverage powder with a diluent, preferably water. The device for contacting the food ingredient with the diluent can be comprised in the list of : a jet(s) head, a mixing bowl, a whipper bowl.
The jet(s) head can be a nozzle delivering at least one jet of diluent. Preferably it delivers at least two jets of diluent and even more preferably the jets head is able to rotate during the delivery of the diluent through the nozzle.
The mixing bowl can be a chamber configured to receive the diluent and the food or beverage powder. It can be designed so as to make an efficient contact of the powder and the diluent, and improve the dissolution of the powder.
The whipper bowl usually comprises a first part which is a mixing chamber configured to receive the diluent and the powder and a second part comprising a whipper configured to make the mixture of the diluent and the powder foam.

In a **third aspect** of the invention, there is provided a method for preparing a beverage by dissolution of a beverage or food powder with a diluent in a beverage dispenser,
said beverage dispenser, comprising :
- at least one container for storing and dosing a food or beverage powder, said container comprising :
   - a tank,
   - an outlet duct,
   - at least one dosing device configured for displacing a dose of powder in direction of the outlet duct,
- at least one beverage preparation unit operatively linked to the at least one container for preparing a beverage from a dose of stored food or beverage powder and a dose of diluent, said method comprising the step of displacing the food or beverage powder to the outlet duct in order to dispense the food or beverage powder through the end of the outlet duct in the at least one beverage preparation unit,
wherein the food or beverage powder is cut by a blade at the end of the outlet duct while it is dispensed through the end of the outlet duct in the at least one beverage preparation unit.

Accordingly objects of the invention are solved since the dose of food or beverage powder is cut before it falls out of the outlet duct. Consequently small doses of powder are delivered in the beverage preparation unit that can be easily dissolved.

In the present invention the food or beverage powder designates powders, pellets or granules of food or beverage ingredients. According to the preferred mode, the beverage ingredients are soluble ingredients like soluble coffee, tea, chocolate, milk, sugar, flavoured powders, soup, .. Most preferably powder is milk powder, preferably full fat milk, or chocolate powder.

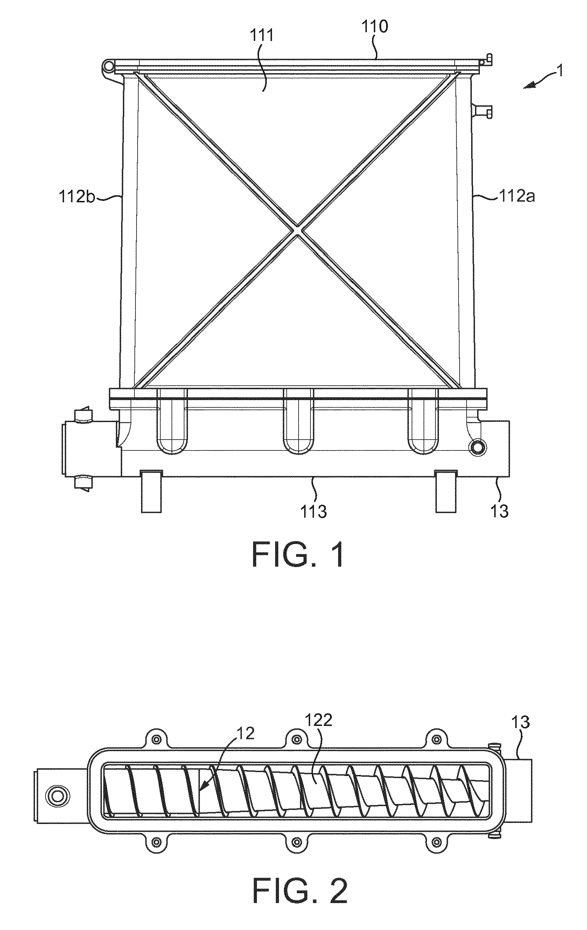

In the present application the terms "top", "bottom", "lateral", "horizontal", "external" are used to describe the relational positioning of features of the invention. These terms should be understood to refer to the container in its normal orientation when positioned in a beverage preparation dispenser for the production of a beverage as shown in figures 1, 6, 9 or 10a. The terms "rear" and "front" are to be understood according to the sense of displacement of external the powder inside the container, the powder being moved by the endless screw(s).

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

The characteristics and advantages of the invention will be better understood in relation to the following figures :
- Figure 1 is a side view of a container according to the invention,
- Figure 2 is a top view of the bottom of the container of Figure 1,
- Figure 3 is a front view of the bottom of the container of Figure 2,
- Figure 4 is a perspective view of an endless screw that can be used in a container according to the invention,
- Figure 6 is a perspective view of a container with two endless screws according to the invention,
- Figures 7 and 8 are top views of the bottom of the container of Figure 6,
- Figure 9 is a view of a beverage dispenser according to the state of the art,
- Figure 10a illustrates a container with a movable cover in an opened state,
- Figure 10b illustrates a container with a movable cover in a closed state.

### Detailed description of the drawings

**Figure 1** illustrates a beverage powder container 1 according to the invention. The container comprises a tank 11 to store a powder. The tank 11 is closed at its top by a removable lid 110 in order to be able to refill the tank with powder. The container usually presents an essentially parallepipedal shape presenting two vertical lateral walls 111 and two vertical end walls, one rear front wall 112a and one rear end wall 112b. The container comprises a horizontal outlet duct 13 at the bottom 113 of the tank for evacuating the powder from the tank. The outlet duct 13 is positioned at the bottom of a terminal wall.
With further reference to **Figure 2****,** the container comprises an endless screw 12 at the bottom 113 of the tank.

The endless screw may be arranged to comprise a volume of powder transport that is greater in the front portion of the endless screw than in the rear portion of the screw. For that, the cylindrical core 122 of the endless screw may present a decreasing section from the rear side to the front side of the tank thus reducing the capacity of the screw to move the powder in the rear region as opposed to the front region of the container and thereby reducing cliffing at the front region.

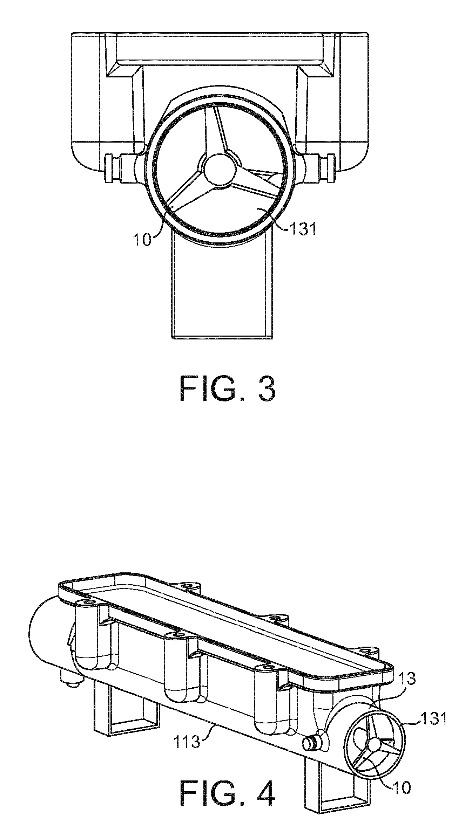

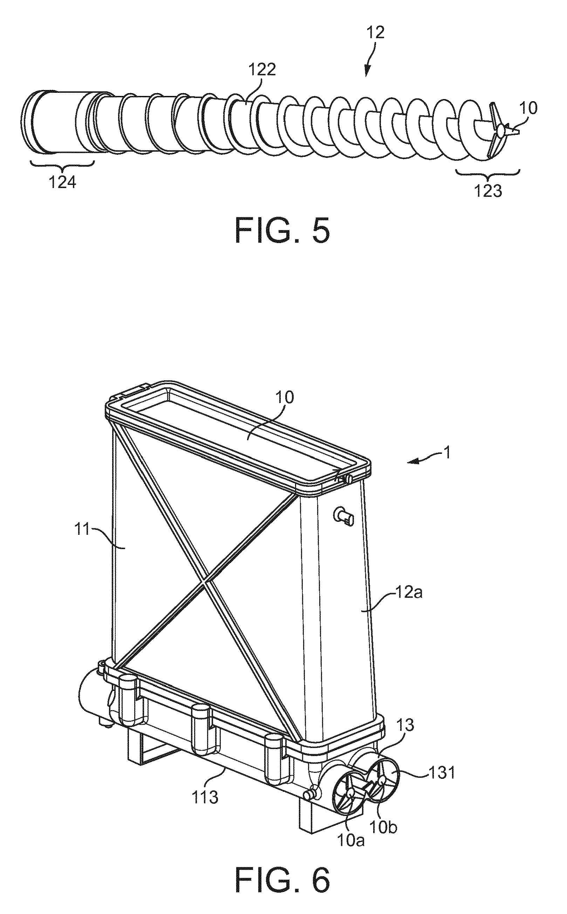

**Figures 3 and 4** show the external end 131 of the outlet duct. A blade 10 is present in the outlet duct. This blade is rotatable by means of the endless screw. As illustrated in Figure 5 the blade 10 is attached at the front end part 123 of the endless screw. The front end part 123 of the endless screw is positioned in the outlet duct 13 but, preferably, it does not overlap the external end 131 of the outlet duct so that the blade is positioned at the external end 131 of the outlet duct.
The rear end part of the endless screw is configured for cooperating with a motor shaft in order to be rotated.

**Figures 6 to 8** illustrate a particular embodiment of the invention wherein the container comprises two endless screws 12a, 12b presenting the same configuration as the endless screw of Figure 5. Consequently the container comprises two rotating blades 10a, 10b at external end 131 of the outlet duct.

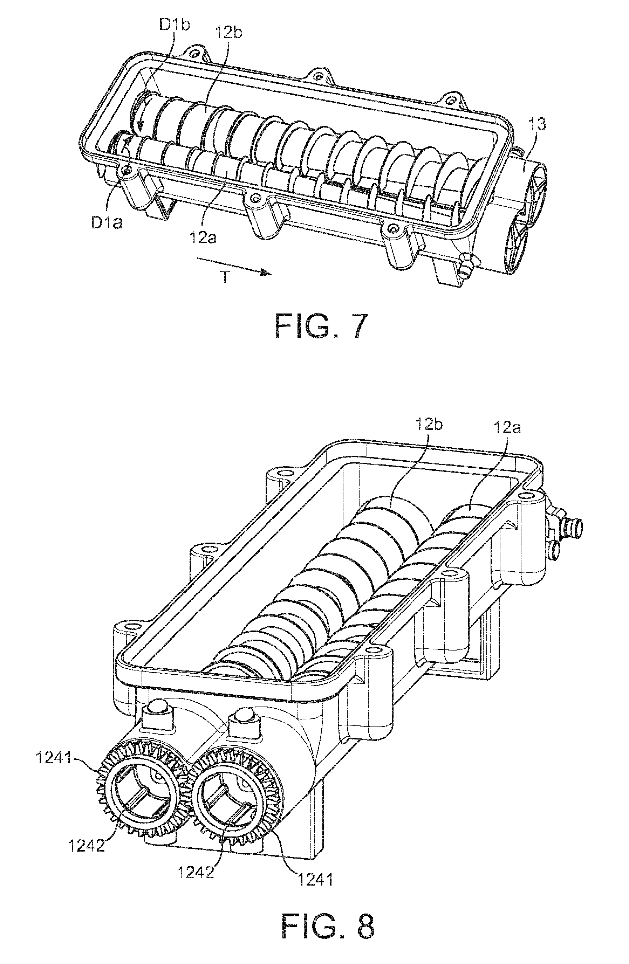

The rear end parts of the screws 12a, 12b present indentations 1422 that cooperate together. Consequently, when one of the screws 12a is rotated, the other screw 12b is rotated simultaneously. Yet due to the direct gearing, when the first screw 12a rotates on one direction D1a, the second screw 12b rotates in one direction D1b opposed to D1a. Consequently the screw path of the second screw 12b is inversed compared to the screw path of the first screw 12a in order to displace the powder in the same direction T to the outlet 13 when it is rotated in direction D1 b (see Figure 7).
Due to the presence of external indentations 1422 on the external surface of the rear end part of the screws cooperating with one another, the actuation of only one screw 12a or 12b by a motor shaft is sufficient to get the rotation of both endless screws 12a, 12b.

Containers with only one rod and one endless screw such as illustrated in Figures 1 to 4 present the advantages that they can be used in existing beverage dispensers since they can be designed with the same external features of the containers of the state of the art that cooperate with the existing dispensers, that is to say the shape of the container and the connection with the shaft of the actuating motor.

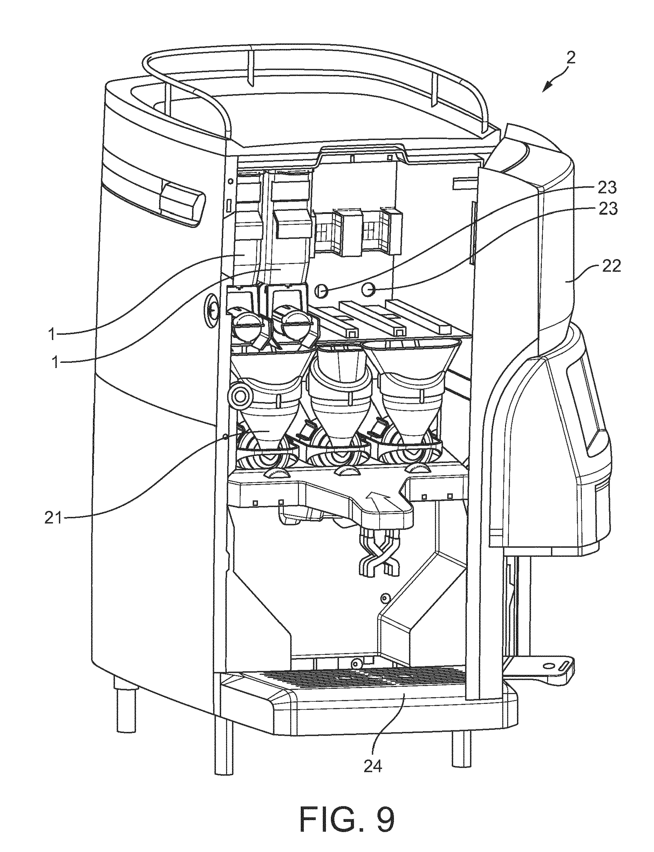

**Figure 9** illustrates a beverage dispenser according to the state of the art. Behind the front door 22, the dispenser comprising beverage powder containers 1 placed above beverage preparation units 21. The outlets of the containers are oriented so as to deliver the beverage powder in the beverage preparation 3 for contacting a dose of beverage powder with a diluent. The diluent is supplied by a fluid system comprising usually a boiler, a pump and a heater placed in the back part of the dispenser (not illustrated). The beverage preparation unit 21 delivers the beverage in a cup placed in a dispensing area 24.
The containers 1 cooperate with motor shafts 23 at their rear end in order to actuate the dosing screw inside the containers.
The containers of the present invention can be positioned in such a dispenser in place of existing containers.

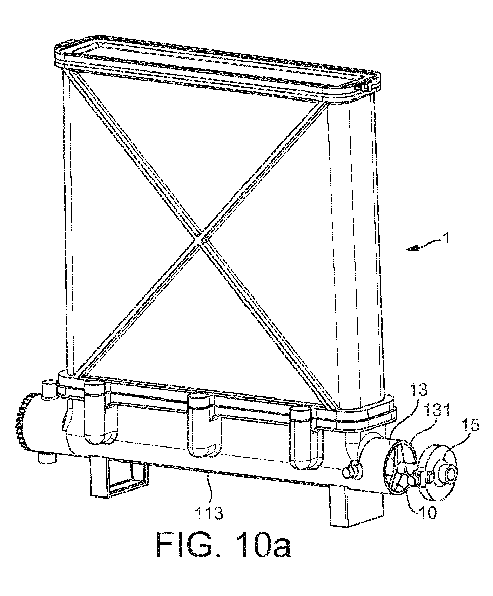

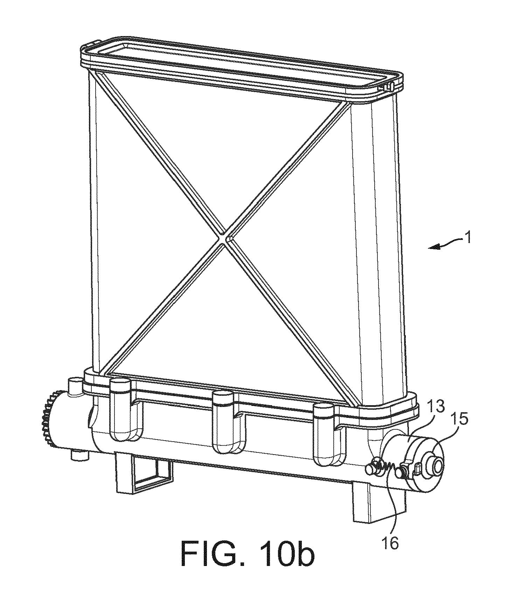

**Figures 10a** **and** **10b** illustrate a container 1 identical to the container described in Figures 1 to 4 except that it comprises a movable 15 configured for closing the external end 131 of the outlet duct 13. The shape of the outlet 15 cooperates with the shape of the external end 131 of the outlet duct so that the cover prevents powder from falling from the outlet. The cover is movable in translation along the longitudinal axis of the outlet duct 13. Figure 10a illustrates the full displacement of the cover 15 away from the external end 131 of the outlet duct whereas Figure 10b illustrates the cover 15 positioned at the external end 131 of the outlet duct and closing the outlet duct 13. Fasteners 16 - here springs - on each side of the cover 15 and the outlet duct 13 maintains the cover during its movement. The cover can be made movable by a rod extending through the longitudinal axis of the endless screw and cooperating at its front end with the cover. The movement of the rod actuates the movement of the cover.

Although the invention has been described with reference to the above illustrated embodiments, it will be appreciated that the invention as claimed is not limited in any way by these illustrated embodiments.
Variations and modifications may be made without departing from the scope of the invention as defined in the claims. Furthermore, where known equivalents exist to specific features, such equivalents are incorporated as if specifically referred in this specification.
As used in this specification, the words "comprises", "comprising", and similar words, are not the be interpreted in an exclusive or exhaustive sense. In other words, they are intended to mean "including, but not limited to".

### List of references in the drawings :

- **container**: 1
- **blade**: 10, 10a, 10b
- **tank**: 11
- lid: 110
- lateral wall: 111
- end wall: 112
- bottom: 113
- **endless screw**: 12, 12a, 12b
- core: 122
- front end part: 123
- rear end part: 124
- external indentations: 1241
- internal indentations: 1242
- **duct**: 13
- external end: 131
- **cover**: 15
- **fastener**: 16
- **beverage dispenser**: 2
- beverage preparation unit: 21
- front door: 22
- motor shaft: 23
- dispensing: 24

## Claims

1. Container (1) for storing and dosing a food or beverage powder comprising :
- a tank (11),
- a horizontal outlet duct (13) at the bottom of the tank,
- at least one rotatable volumetric dosing device (12) positioned at the bottom of the tank (113) and configured for displacing a dose of powder in direction of the outlet duct,
wherein the container comprises at least one movable, preferably rotating, cutting blade (10, 10a, 10b) at the end of the outlet duct.

2. A container according to Claim 1, wherein the front end (123) of the rotatable volumetric dosing device extends through the outlet duct (13).

3. A container according to Claim 1 or 2, wherein the rotating cutting blade is attached to the front end (123) of the rotatable volumetric dosing device.

4. A container according to any one of the precedent claims, wherein the rotatable volumetric dosing device (12) is configured to comprise a volume of transport that is greater in the front portion of the device than in the rear portion of the device.

5. A container according to any one of the precedent claims, wherein the rotatable volumetric dosing device is an endless screw (12).

6. A container according to the precedent claim, wherein said container comprises two endless screws (12a, 12b), preferably positioned next to the other in the same horizontal plane.

7. A container according to the precedent claim, wherein a rotating cutting blade is attached to the front end of each endless screw (12a, 12b)

8. A container according to Claims 6 or 7, wherein said container comprises two endless screws (12), preferably positioned next to the other in the same horizontal plane.

9. A container according to any one of the precedent claims, wherein the container comprises a movable cover (15) configured for closing the external end (131) of the outlet duct (13).

10. Beverage dispenser (2) comprising :
- at least one container (1) according to any one of Claims 1 to 9,
- at least one beverage preparation unit (21) operatively linked to the container for preparing a beverage from the stored food or beverage powder,
- at least one motor for actuating the at least one rotatable volumetric dosing device (12) of the container.

11. Method for preparing a beverage by dissolution of a beverage or food powder with a diluent in a beverage dispenser (2),
said beverage dispenser (2), comprising :
- at least one container for storing and dosing a food or beverage powder, said container comprising :
. a tank (11),
. an outlet duct (13),
. at least one dosing device (12) configured for displacing a dose of powder in direction of the outlet duct,
- at least one beverage preparation unit (21) operatively linked to the at least one container for preparing a beverage from a dose of stored food or beverage powder and a dose of diluent,
said method comprising the step of displacing the food or beverage powder to the outlet duct in order to dispense the food or beverage powder through the end of the outlet duct in the at least one beverage preparation unit (21),
wherein the food or beverage powder is cut by a blade (10) at the end of the outlet duct while it is dispensed through the end of the outlet duct in the at least one beverage preparation unit (21).
